(19) Europäisches Patentamt
European Patent Office
Office européen des brevets

(11) **EP 1 350 647 B1**

(12) **EUROPÄISCHE PATENTSCHRIFT**

(45) Veröffentlichungstag und Bekanntmachung des Hinweises auf die Patenterteilung:
**05.01.2005   Patentblatt 2005/01**

(51) Int Cl.⁷: **B60H 1/22**, B60H 1/00

(21) Anmeldenummer: **02007160.1**

(22) Anmeldetag: **28.03.2002**

(54) **Elektrische Heizung für ein Kraftfahrzeug**

Electric heater for a motor vehicle

Chauffage électrique pour un véhicule à moteur

(84) Benannte Vertragsstaaten:
**DE ES FR GB IT**

(43) Veröffentlichungstag der Anmeldung:
**08.10.2003   Patentblatt 2003/41**

(73) Patentinhaber: **Catem GmbH & Co.KG**
**76863 Herxheim bei Landau/Pfalz (DE)**

(72) Erfinder:
• **Bohlender, Franz**
**76870 Kandel (DE)**

• **Zeyen, Michael**
**76819 Landau/Queichheim (DE)**

(74) Vertreter: **Grünecker, Kinkeldey,**
**Stockmair & Schwanhäusser Anwaltssozietät**
**Maximilianstrasse 58**
**80538 München (DE)**

(56) Entgegenhaltungen:
**DE-A- 10 026 361        US-B1- 6 262 400**

**Beschreibung**

Die Erfindung bezieht sich allgemein auf eine elektrische Heizung für ein Kraftfahrzeug und auf eine Steuereinheit dafür. Insbesondere bezieht sich die Erfindung auf solche elektrischen Heizungen, die PTC-Elemente aufweisen und zur Erwärmung des Innenraums eines Kraftfahrzeugs verwendet werden, wie in DE 10026361 veröffentlicht wird.

Für den Einsatz in Kraftfahrzeugen, insbesondere solchen mit verbrauchsoptimierten Verbrennungsmotoren, werden elektrische Heizungen zur Beheizung von Innenraum und Motor verwendet. Solche elektrischen Heizungen sind jedoch auch für andere Einsatzzwecke geeignet, beispielsweise zur Raumklimatisierung, in Industrieanlagen, in Haushaltsgeräten u.dgl.

Der verbesserte Wirkungsgrad von verbrauchsoptimierten Verbrennungsmotoren zieht eine teilweise erhebliche Heizleistungsreduktion in Kraftfahrzeugen nach sich. Bei Fahrten im unteren Teillastbereich des Motors hat dies eine sehr viel schwächere Aufheizung des Fahrzeuginnenraums zur Folge. Zum Ausgleich eines solchen Wärmedefizites werden elektrische Zusatzheizungen verwendet, insbesondere in Kfz-Klimaanlagen.

Solche Kfz-Heizungen bestehen aus mit PTC-Heizelementen bestückten Radiatorelementen, die in einem Halterahmen mit Federelementen zusammengehalten werden. PTC-Elemente sind temperaturabhängige Halbleiterwiderstände, deren Widerstandswert mit zunehmender Temperatur ansteigt. Durch das Anlegen einer elektrischen Spannung an die PTC-Heizelemente werden diese in Abhängigkeit von ihrem Widerstand von einem Strom durchflossen. Die PTC-Elemente heizen sich dabei auf eine definierte Temperatur auf. Die von den PTC-Elementen erzeugte Wärme wird an einen Luftstrom oder einen Wasserstrom gegeben.

Aufgrund ihrer Eigenschaft, ab einer charakteristischen Temperatur ihren elektrischen Widerstand sprungartig zu erhöhen, können PTC-Elemente als selbstregelnde Heizelemente eingesetzt werden, da sie bei Erreichen der charakteristischen Temperatur selbsttätig zurückregeln. Durch die Selbstregelung der PTC-Elemente entspricht die aufgenommene elektrische Leistung genau der abgegebenen thermischen Leistung.

Ein Störungsfall kann jedoch auftreten, wenn die Luft- bzw. Wasserzufuhr unterbrochen wird, insbesondere wenn das den Luftstrom erzeugende Gebläse oder die den Wasserstrom erzeugende Pumpe ausfällt. In diesem Fall erhöht sich die Temperatur des PTC-Heizelementes auf die maximale PTC-Temperatur. Dabei reduziert sich die elektrische Leistung auf einen Wert, der nur noch einem Bruchteil der maximal möglichen Leistung entspricht.

Eine entsprechende Störung tritt ebenfalls auf, wenn bei Ansteuerung einer elektrischen Heizung die Luftzufuhr deutlich vermindert oder unterbrochen wird, ohne dass die zu erzeugende Wärmemenge entsprechend reduziert wird. Eine solche Situation kann bei Störung innerhalb einer automatischen Heizungssteuerung oder auch bei manueller Einstellung einer Heizung auftreten (Fehlbedienung).

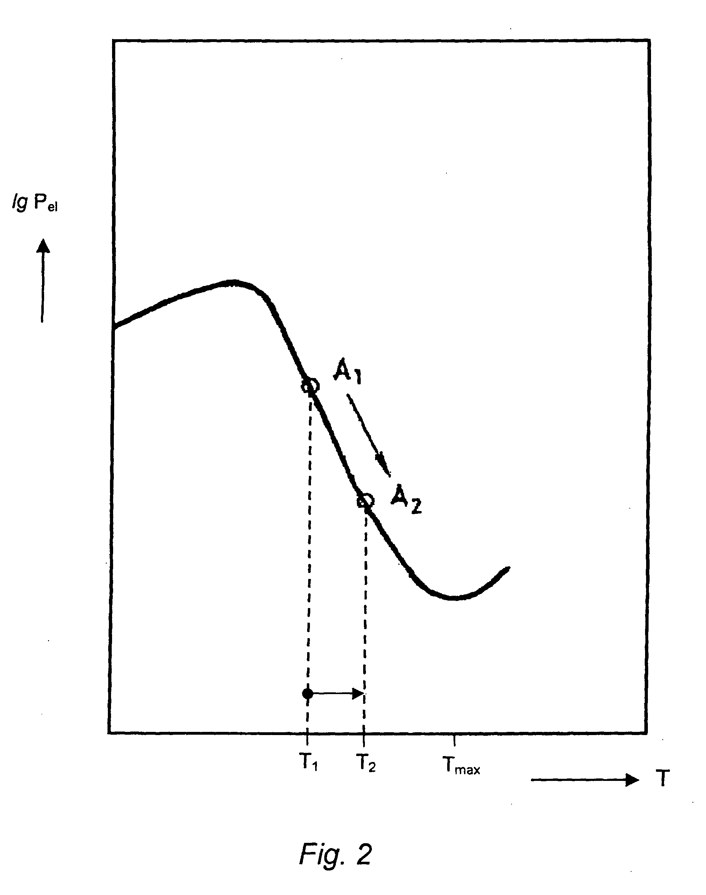

Diese Temperaturabhängigkeit der von dem PTC-Element in Wärme umgesetzten elektrischen Leistung $P_{el}$ ist in Fig. 2 über der Temperatur des PTC-Elementes dargestellt. Bei einer gegebenen Betriebsspannung stellt sich im PTC-Element ein Arbeitspunkt in Abhängigkeit von der Umgebungstemperatur, d.h. der Temperatur der Luft und der Wärmeleitung vom PTC-Element zum aufzuheizenden Medium ein. Ein solcher Arbeitspunkt ist bei der Temperatur $T_1$ mit dem Arbeitspunkt $A_1$ in Fig. 2 dargestellt.

Heizt sich das PTC-Element aufgrund einer Störung im Luftstrom auf, so kann die im PTC-Element umgesetzte Wärmemenge nicht mehr abgeführt werden. Das PTC-Element nimmt dann eine höhere Temperatur ein. Sein Arbeitspunkt auf der Kennlinie verschiebt sich weiter nach unten, wie in Fig. 2 mit dem neuen Arbeitspunkt $A_2$ bei der Temperatur $T_2$ angegeben. Dabei reduziert sich die abgegebene Wärme und damit auch die Stromaufnahme deutlich.

Die in diesem Fall verbleibende Leistungsaufnahme liegt bei etwa 6 bis 8 % des Vollastwertes, für eine elektrische Heizung mit 1 kW Heizleistung bei Vollast bei immer noch 60 bis 80 Watt.

Trotz Ausfalls der Innenraumbeheizung eines Kfz bei Ausfall des Gebläses wird dennoch elektrische Leistung verbraucht. Dabei kann sich die elektrische Heizung, insbesondere deren Radiatorelemente, auf eine deutlich höhere Temperatur als während des Betriebs aufheizen. Diese deutlich oberhalb der normalen Temperaturen liegende Temperatur kann zu Beschädigungen der Umgebung führen, beispielsweise ein Schmelzen von Kunststoffhalterungen bewirken.

Aufgabe der Erfindung ist es, eine elektrische Heizung mit einem PTC-Heizelement, die einen solchen Havariefall erkennen kann, und eine Steuereinheit dafür anzugeben.

Diese Aufgabe wird mit den Merkmalen der Ansprüche 1 und 3 für eine elektrische Heizung und mit den Merkmalen der Ansprüche 9 und 10 für eine Steuereinheit für eine elektrische Heizung gelöst.

Gemäß einem ersten Aspekt der Erfindung wird ein PTC-Heizelement zur Erwärmung eines Luftstroms mit einer vorgegebenen Soll-Heizleistung angesteuert. Der Luftstrom wird von einem Gebläse erzeugt, dessen Luftdurchsatz ebenfalls einstellbar ist. Sowohl die Soll-Heizleistung des PTC-Elementes als auch der Soll-Luftdurchsatz des Gebläses werden durch vorgegebene Untergrenzen jeweils auf Minimalwerte nach unten beschränkt. Gleichzeitig wird die von dem PTC-Element aufgenommene Leistung gemessen und mit einem Schwellwert verglichen. Der Schwellwert ist dabei so ausgewählt, dass er kleiner als die Untergrenze der vorwählbaren Soll-Heizleistung ist. Unterschreitet die aufgenommene Ist-Heizleistung den vorgegebenen Leistungsschwellwert, wird erfindungsgemäß ein Ausfall der Luftströmung erkannt.

Gemäß einem zweiten Aspekt der vorliegenden Erfindung wird der Schwellwert in - Abhängigkeit von der vorgewählten Soll-Heizleistung eingestellt. Dazu steht der Schwellwert in einem festen Verhältnis zur vorgewählten Soll-Heizleistung. Unterschreitet die gemessene Ist-Heizleistung den jeweils aktuellen Schwellwert, so wird ein Ausfall der Luftströmung festgestellt.

Weitere vorteilhafte Ausführungsformen der Erfindung sind in den Unteransprüchen angegeben.

Bevorzugte Ausgestaltungen der Erfindung werden nachfolgend unter Bezugnahme auf die Figuren näher erläutert.

Fig. 1     zeigt eine Prinzipskizze eines Heizsystems.

Fig. 2     zeigt ein Diagramm der in einem PTC-Element umgesetzten elektrischen-Leistung in Abhängigkeit von der Temperatur.

Fig. 3     zeigt ein Beispiel für den Einsatz einer erfindungsgemäßen elektrischen Heizung.

Fig. 4     zeigt ein Ablaufdiagramm für ein Verfahren gemäß der vorliegenden Erfindung.

Fig. 5     illustriert das Prinzip, das der vorliegenden Erfindung zugrundeliegt.

Fig. 6     illustriert die patentgemäße Lehre im Diagramm der Fig. 5.

Fig. 7     illustriert die erfindungsgemäße Lehre gemäß einem weiteren Aspekt der vorliegenden Erfindung im Diagramm der Fig. 5.

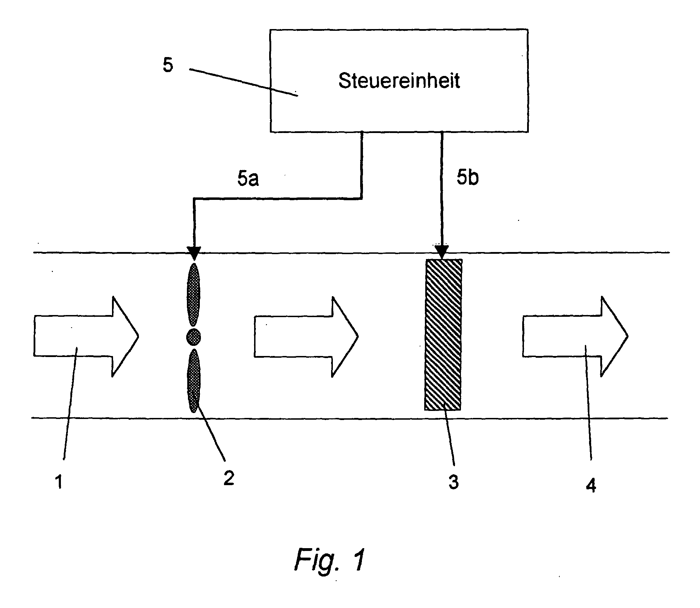

Der prinzipielle Aufbau der erfindungsgemäßen Heizung ist in Fig. 1 angegeben.

Ein aufzuheizendes Medium 1 wird mit Hilfe einer Fördereinrichtung 2 einer Heizeinrichtung 3 zugeführt. Das aufgeheizte Medium 4 kann anschließend dem beabsichtigten Einsatzzweck, insbesondere zur Aufheizung eines Kfz-Innenraums verwendet werden.

Eine elektrische Zusatz-Heizung für Kraftfahrzeuge besteht üblicherweise aus mindestens einer Heizstufe 3 mit Heizelementen und einer Steuereinheit 5. Die Heizelemente 3 sind in der Regel als elektrische Heizwiderstände ausgebildet. Die Heizung 3 und die Steuereinheit 5 können sowohl als getrennte Funktionseinheiten ausgebildet als auch zu einer Baueinheit zusammengefasst sein.

Die Heizung selbst besteht vorzugsweise aus Radiatorelementen, die mit PTC-Heizelementen bestückt sind. Die Radiatorelemente und die PTC-Elemente werden in einem Halterahmen mit Federelementen zusammengehalten. In der Heizung werden die PTC-Elemente als selbstregelnde Heizelemente verwendet, die bei Erreichen der charakteristischen Temperatur selbsttätig zurückregeln, wobei sich die charakteristische Temperatur durch Dotierung bei der Herstellung beeinflussen lässt.

Die Steuereinheit 5 legt dabei in Abhängigkeit von einer vorgegebenen, zu erzeugenden elektrischen Heizleistung eine Spannung an das oder die PTC-Heizelemente an. In Abhängigkeit von der angelegten elektrischen Spannung werden die einzelnen PTC-Heizelemente von Strom durchflossen und heizen sich auf die entspsrechende Temperatur auf. Die Radiatorelemente der Heizung nehmen die Wärme der PTC-Heizelemente auf und geben sie an den Wasser- oder Luftstrom ab.

Gemäß einer bevorzugten Ausführungsform der Erfindung werden das oder die PTC-Heizelemente über eine Pulsdauermodulation (PWM - pulse width modulation) angesteuert. Die PWM-Steuerung variiert die Breite von Spannungsimpulsen einer festen Amplitude in Abhängigkeit von der vorgegebenen Sollheizleistung.

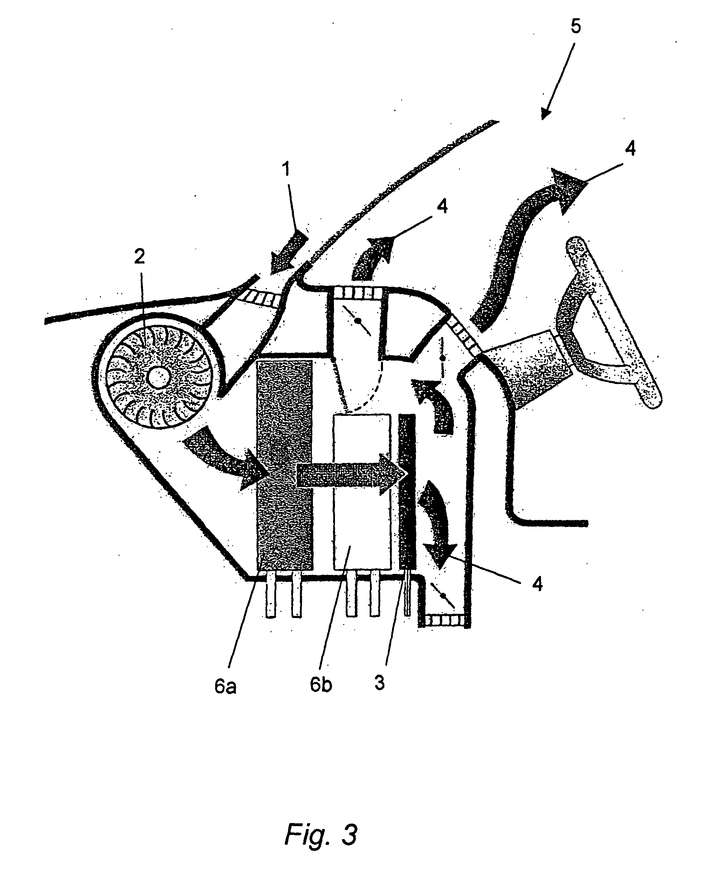

Fig. 3 zeigt die Verwendung eines solchen Heizsystems zur Innenraumbeheizung eines Kraftfahrzeugs. Dabei ist das erfindungsgemäße Heizsystem in eine Kfz-Klimaanlage integriert. Von einem Gebläse 2 wird Außenluft 1 angesaugt und über die Heizung 3 in den Innenraum 5 geblasen. Dabei kann die Luft bei Integration in eine Klimaanlage zuvor über einen Verdampfer 6a und eine weitere Fahrzeugheizung 6b geleitet werden, bevor sie über die elektrische Zusatzheizung 3 strömt.

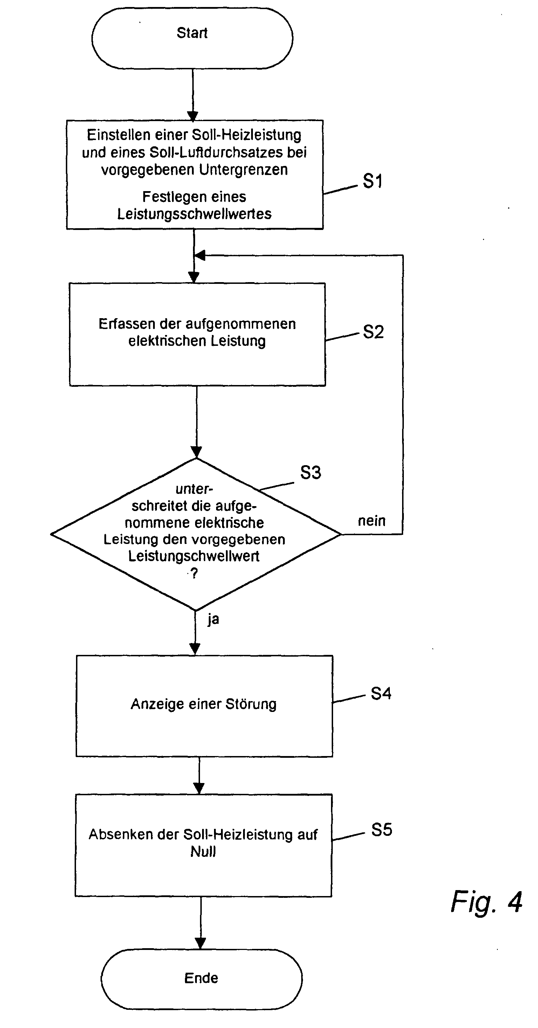

Fig. 4 gibt ein Ablaufdiagramm zur Durchführung des erfindungsgemäßen Verfahrens wieder.

Von einem Benutzer ist die Luftmenge und deren Wärme einstellbar. Dazu wird ein Soll-Heizleistungswert und ein Soll-Luftdurchsatz vorgegeben. Der Auswahlbereich für die Soll-Heizleistung und für den Soll-Luftdurchsatz sind jeweils durch vorgegebene Untergrenzen eingeschränkt. Eine Heizleistung und ein Luftdurchsatz unterhalb der vorgegebenen Grenzen sind nicht auswählbar. Diese Grenzen sind jedoch so niedrig gewählt, dass sie den Heizkomfort nicht beeinträchtigen.

Mit der vom Benutzer ausgewählten Sollheizleistung wird die elektrische Heizung 3 vorzugsweise über die Amplitude einer Spannung oder, bei einer PWM-Steuerung, über das Taktverhältnis angesteuert. Bei der PWM-Steuerung werden die Spannungsimpulse breiter, wenn die Sollheizleistung zunimmt. Die PTC-Elemente der Heizung geben die zugeführte Leistung als Wärme an die Umgebung ab. Mit der vorgegebenen Betriebsspannung bzw. dem vorgegebenen Taktverhältnis stellt sich im PTC-Element ein Arbeitspunkt in Abhängigkeit von der Umgebungstemperatur, d.h. der Temperatur der Luft, und der Wärmeleitung vom PTC-Element zur aufzuheizenden Luft ein. Bei zunehmender Erhöhung der Sollheizleistung stellt sich ein hochohmiger Gleichgewichtszustand mit geringer

Wärmeabgabe ein, sobald die im PTC-Element erzeugte Wärmemenge vom aufzuheizenden Luftstrom nicht mehr abgeführt werden kann.

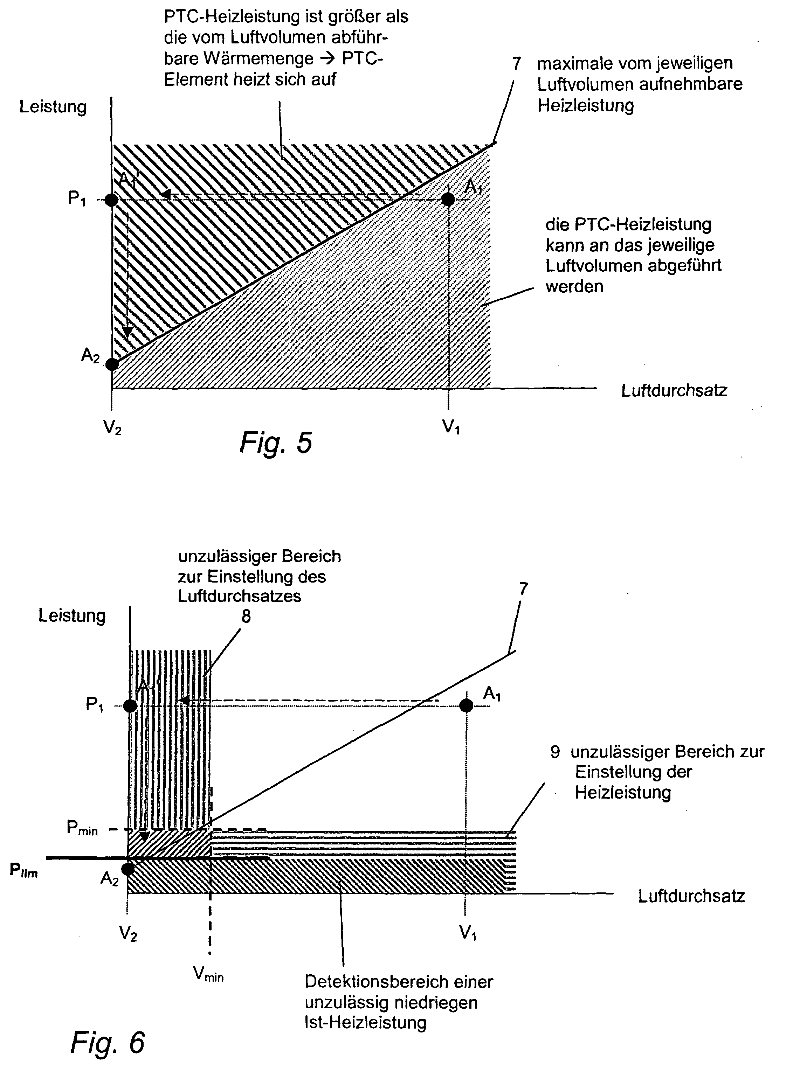

Im folgenden wird unter Bezugnahme auf Fig. 5 das der Erfindung zugrundeliegende Prinzip erläutert. In dem in Fig. 5 dargestellten Diagramm ist auf der X-Achse der Luftdurchsatz des Gebläses und auf der Y-Achse die Heizleistung des PTC-- Elementes aufgetragen. Je höher der Luftdurchsatz ist, desto mehr Wärmeenergie kann von der Luft pro Zeiteinheit aufgenommen werden. Dieser Zusammenhang ist mit Hilfe der durchgezogene Linie 7 dargestellt. Sie gibt die maximale vom jeweiligen Luftvolumen aufnehmbare Heizleistung an.

Durch die Linie 7 wird der durch die Heizleistung und den Luftdurchsatz aufgespannte Raum in zwei Bereiche unterteilt, nämlich den unter der Linie 7 liegenden Bereich, in dem die PTC-Heizleistung vollständig an das jeweilige Luftvolumen abgeführt werden kann, und den oberhalb der Linie 7 liegenden Bereich, in dem die PTC-Heizleistung größer ist, als das Luftvolumen Wärme aufnehmen kann.

Wird ein Arbeitspunkt aus Soll-Heizleistung und Soll-Luftdurchsatz gewählt, der oberhalb der Linie 7 liegt, so heizt sich das PTC-Element 3 durch die nicht an die Luft abführbare Wärme auf.

Aufgrund der PTC-Charakteristik sinkt bei Erwärmung des PTC-Elementes die vom PTC-Element abgegebene Heizleistung ab, und zwar soweit bis sich wieder ein thermisches Gleichgewicht einstellt. Grafisch lässt sich dieses Verhalten in Fig. 5 dadurch veranschaulichen, dass der oberhalb der Linie 7 liegende Arbeitspunkt vertikal soweit nach unten bewegt wird, bis er auf die Linie 7 trifft. In diesem Punkt kann die vom PTC-Element erzeugte Wärme wieder vollständig vom Luftstrom aufgenommen werden.

Ein thermisches Gleichgewicht stellt sich bei PTC-Elementen basierend auf folgender Gleichung ein:

$$U^2/R = I^2 \times R = G_{th} (T - T_u).$$

Diese Gleichung gibt an, dass die elektrische Leistung, die von dem PTC-Element aufgenommen wird, gleich der durch Kühlung an die Umgebung abgegebenen Wärme ist. Dabei stellt $G_{th}$ den Wärmeleitwert dar, T die Temperatur des Heizelementes und $T_u$ die Umgebungstemperatur.

In Fig. 5 sei ein Arbeitspunkt A, angenommen, der sich aus einer Soll-Heizleistung $P_1$ und einem Soll-Luftdurchsatz $V_1$ ergibt. Dieser Arbeitspunkt befindet sich unterhalb der Linie 7. Die erzeugte Heizleistung kann deshalb vollständig an das Luftvolumen abgegeben werden.

Sobald ein Störungsfall in der Luftzuführung auftritt, inbesondere beim Ausfall des Gebläses 2, sinkt der Luftdurchsatz auf Null ab. Dementsprechend verschiebt sich auch die in Fig. 5 eingezeichnete Position des Arbeitspunktes $A_1$ zu der neuen Position $A_1$'. Dieser Arbeitspunkt entspricht weiterhin der Heizleistung $P_1$, der Luftdurchsatz ist jedoch von dem Soll-Luftdurchsatzwert $V_1$ auf $V_2=0$ abgesunken. Der neue Arbeitspunkt $A_1$' befindet sich jetzt oberhalb der Linie 7. Die vom PTC-Heizelement erzeugte Wärme kann nun nicht mehr abgeführt werden. Dementsprechend steigt die Temperatur des PTC-Elementes an und - entsprechend der PTC-Charakteristik - sinkt die abgegebene Wärmeleistung ab.

Wie zuvor erläutert, sinkt die Wärmeabgabe soweit ab, bis der Arbeitspunkt die Linie 7 erreicht hat und die vom PTC-Element erzeugte Wärme vollständig wieder abgeführt werden kann. Der nach dem Absinken der Ist-Heizleistung erreichte Zustand ist in Fig. 5 durch den neuen Arbeitspunkt $A_2$ wiedergebeben.

Die Erfindung ist darauf gerichtet, mit möglichst niedrigem Aufwand einen Ausfall des Luftstroms zu detektieren. Natürlich ist es technisch machbar, einen Ausfall des Gebläses oder eine sonstige Unterbrechung oder Störung in der Luftzuführung mit Hilfe zusätzlicher Sensoren festzustellen. Ziel der Erfindung ist es jedoch, zusätzliche Hardware zu vermeiden und ohne Eingriff in die bestehende Heizvorrichtung und Luftführung einen Havariefall zu detektieren. Zu dem Zweck wird erfindungsgemäß das Absinken des Arbeitspunktes auf den Punkt $A_2$ erfaßt.

Im Schritt S2 detektiert die Steuereinheit 5 gemäß der vorliegenden Erfindung, welche elektrische Leistung tatsächlich von der Heizung 3 aufgenommen und als Wärme abgeführt wird. Anschließend überprüft die Steuereinheit im Schritt S3, ob die von dem PTC-Element 3 aufgenommene elektrische Leistung, die als Wärme an das Medium 1 abgegeben wird, einen vorgegebenen Schwellwert unterschreitet. Wird der Schwellwert unterschritten, so wird von der Steuereinheit 5 festgestellt, dass ein Störungsfall (Schritt S4) vorliegt, denn das PTC-Element 3 ist nicht in der Lage, ausreichend Wärme abzuführen.

Ein Unterschreiten des Schwellwertes zeigt an, dass sich ein hochohmiger Gleichgewichtszustand bei entsprechend hohen Umgebungstemperaturen eingestellt hat. Solange jedoch immer noch elektrische Leistung in Wärme umgesetzt wird, heizt sich das PTC-Element und die Umgebung weiter auf.

Eine solche Störung bzw. Fehlbedienung einer manuellen Klimaanlage z.B. durch Unterbrechen der Luftzufuhr ohne Absenkung der Heizleistung kann über den oben beschriebenen Vergleich erkannt werden. Wenn daher die aufgenommene elektrische Leistung unterhalb des Schwellwertes liegt, dann wird von der Steuereinheit festgestellt, dass eine Störung vorliegt und, um einen unnötigen Energieverbrauch zu vermeiden, wird die zu erbringende Soll-Heizleistung deutlich abgesenkt, vorzugsweise abgeschaltet (Schritt S5). Gleichzeitig kann an den Benutzer, beispielsweise über einen Bordcomputer in einem Kraftfahrzeug, eine entsprechende Störungsmeldung angezeigt werden.

Der Schwellwert, mit dem die aufgenommene elektrische Leistung verglichen wird, ist so festgelegt, dass eine Störung sicher detektiert werden kann. Dazu liegt das Niveau des Schwellwertes so, dass eindeutig zwischen einem "Störfall" und einem "Normalfall" unterschieden werden kann.

Um ein Absinken des Arbeitspunktes in Fig. 5 zu erkennen, wird erfindungsgemäß ein Schwellwert $P_{lim}$ für die vom PTC-Element 3 aufgenommene Leistung festgelegt.

Dieser Leistungsschwellwert $P_{lim}$ wird so eingestellt, dass er unterhalb der Mindest-Heizleistung $P_{min}$ liegt, jedoch oberhalb des Arbeitspunktes A2.

Dieser Zusammenhang ist in Fig. 6 im einzelnen dargestellt. Um zu vermeiden, dass der Arbeitspunkt $A_2$ vom Benutzer selbst ausgewählt werden kann, wird die Mindestsoll-Heizleistung $P_{min}$ und der Mindest-Soll-Luftdurchsatz $V_{min}$ festgelegt. Damit handelt es sich bei diesen in Fig. 6 mit 8 und 9 bezeichneten Bereichen um unzulässige Positionen für einen Arbeitspunkt.

Die Verschiebung des Arbeitspunktes $A_1$ auf den Arbeitspunkt $A_1'$ lässt sich ohne zusätzlichen Hardware-Aufwand nicht feststellen. Indirekt lässt sich jedoch dieser Ausfall durch die automatische Verschiebung des Arbeitspunktes $A_1'$ in den Arbeitpunkt $A_2$ detektieren. Diese Verschiebung hat ihre Ursache in der PTC-Charakteristik des Heizelementes 3. Ein Absinken des Arbeitspunktes in den unzulässigen Bereich 9 lässt sich somit leicht feststellen. Dazu wird eine Schwelle zum Vergleich mit der gemessenen Ist-Heizleistung festgelegt, die unterhalb von $P_{min}$ liegt. In Fig. 6 ist ein Beispiel angegeben, bei dem $P_{lim}$ deutlich unter $P_{min}$ liegt. Mit einem solchen Schwellwert ist ein Absinken des Arbeitspunktes leicht und insbesondere zuverlässig detektierbar.

In einer alternativen Ausführungsform orientiert sich der Schwellwert prozentual an dem vorgegebenen Sollwert. Der Schwellwert beträgt jeweils einen festgelegten Anteil vom eingestellten Sollwert, beispielsweise 20 % der vorgegebenen Soll-Heizleistung. Wird dieser Wert, der bei dieser Ausführungsform mit der Sollheizleistung schwankt, unterschritten, so liegt ein Störfall vor.

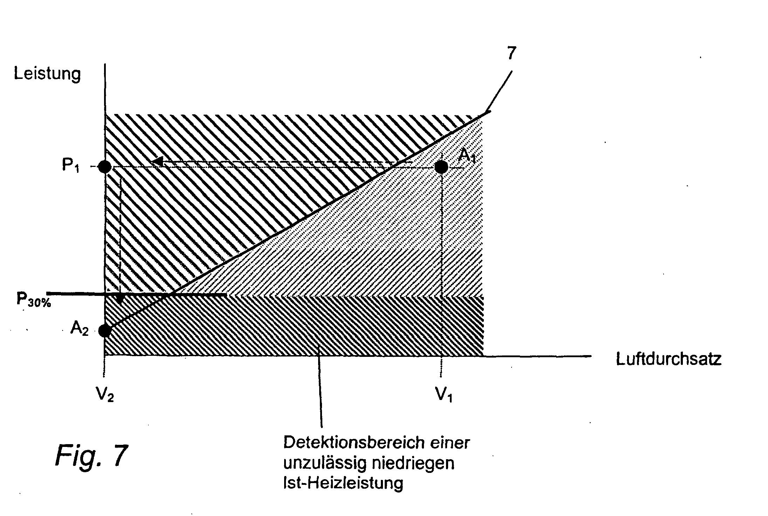

Diese Vorgehensweise ist in Fig. 7 wiedergegeben. Der Leistungs-Schwellwert $P_{30\%}$ wird in Abhängigkeit von der vorgegebenen Sollheizleistung eingestellt. So kann auch bei hohen Soll-Heizleistungen ein Ausfall des Luftstroms deutlich schneller festgestellt werden. Diese Ausführungsform verlangt ebenfalls, Untergrenzen für die Einstellung der Soll-Heizleistung und des Soll-Luftdurchsatzes festzulegen, so dass der Arbeitspunkt $A_2$ nur bei Ausfall des Luftstroms erreicht wird.

Bei einer besonderen Ausgestaltung dieser Ausführungsform variiert der prozentuale Anteil des Schwellwertes von dem vorgegebenen Sollwert in Abhängigkeit von der Größe des Sollwertes. Bei einem niedrigen Sollwert wird ein Störungsfall beispielsweise schon bei Unterschreiten von 40 % detektiert, wohingegen bei höheren vorgegebenen Sollwerten ein Störungsfall erst bei Unterschreiten einer 20 %-Schwelle detektiert wird.

Der Schwellwert liegt vorzugsweise zwischen 10 und 50 % des vorgegebenen Wertes, also des vorgegebenen Strom- oder Spannungswertes. Vorzugsweise werden Schwellwerte gewählt, die zwischen 15 und 30 % des Vorgabewertes liegen.

Zusammenfassend betrifft die vorliegende Erfindung ein Heizsystem mit PTC-Heizelementen zur Aufheizung eines strömenden Mediums. Um bei Ausfall der Strömung eine unnötige Heizung der PTC-Elemente zu vermeiden, wird die von den PTC-Elementen zu erbringende Sollheizleistung mit der tatsächlich aufgenommenen elektrischen Leistung verglichen und bei Unterschreiten eines vorgegebenen Schwellwertes wird die eingestellte Sollheizleistung entsprechend reduziert.

Sowohl die Sollheizleistung als auch die tatsächlich von der Heizung aufgenommene elektrische Leistung (Ist-Heizleistung) lassen sich über die Strom- und Spannungswerte der Kontakte der PTC-Elemente gewinnen. Bei einer externen Ansteuerung von PTC-Heizelementen, d.h. bei separaten Baugruppen für die Heizelemente und deren Ansteuerung, können die Strom- und Spannungswerte der Anschlußleitungen verwendet werden. Bei integrierter Bauweise von Steuereinheit und Heizelemente werden die Werte den Kontakten der PTC-Elemente entnommen. Aus den Spannungswerten, mit denen die PTC-Elemente angesteuert werden, läßt sich die Sollheizleistung bestimmen, während sich aus dem Strom, der über die Kontakte bzw. durch die Anschlußleitungen fließt, die Istheizleistung der Heizelemente bestimmen läßt. Dabei müssen bei einer PWM-Steuerung die tatsächlichen Spannungs- und Stromwerte zunächst einer zeitlichen Mittelung unterworfen werden, um aus den pulsförmigen Werten Effektivwerte, also die tatsächlich vorgegebene bzw. aufgenommene Wärmeleistung zu erhalten.

Die erfindungsgemäßen Kfz-Zusatzheizungen sind vorzugsweise mehrstufig ausgebildet, wobei die einzelnen Heizstufen parallel oder seriell ansteuerbar sind. Bei paralleler Ansteuerung wird an alle Heizstufen die gleiche Betriebspannung bzw. eine Spannung mit gleichem Taktverhältnis angelegt. Dementsprechend arbeiten alle Heizelemente in demselben Arbeitspunkt. Um einen Ausfall der Luftströmung zu erkennen, ist es ausreichend, die Soll- und Istheizleistung einer der Heizstufen zu überwachen. Bei Detektion eines Ausfalls wird die Heizleistung aller Heizstufen gleichmäßig abgesenkt.

Bei serieller Ansteuerung werden die einzelnen Heizstufen in Abhängigkeit von der Sollheizleistung aufeinanderfolgend angesteuert. Bei geringem Heizbedarf wird nur eine der Heizstufen mit einer entsprechenden Sollheizleistung angesteuert. Steigt der Heizbedarf über die von der ersten Heizstufe erzeugbare Wärmemenge an, so wird die zweite Heizstufe mit der von der ersten Heizstufe nicht mehr umsetzbaren Heizleistung angesteuert. Bei maximalem Wärmebedarf werden alle Heizstufen mit maximaler Spannung bzw. Pulsbreite angesteuert. Bei einer solchen Ansteuerung wird vorzugsweise nur die Soll- und Istheizleistung der untersten Heizstufe überwacht. Fällt die Istheizleistung unter den vorgegebenden Schwellwert, so wird die Sollheizleistung der Gesamtheizung entsprechend abgesenkt.

Sowohl bei einer parallelen als auch bei einer seriellen Ansteuerung können eine Mehrzahl oder auch alle Heizstufen so ausgestaltet sein, dass ihre Soll- und lstheizleistung erfaßt und überwacht wird. Auf diese Weise läßt sich die Zuverlässigkeit des PTC-Temperaturschutzes erhöhen.

Werden bei einer Heizung alle Heizstufen erfindungsgemäß überwacht, so kann der Fall eintreten, dass ein Ausfall nur bei einer der Heizstufen erkannt wird. Eine Ursache dafür kann in unterschiedlichen Temperaturverteilungen oder Strömungsverhältnissen für die einzelnen Heizstufen liegen, so dass beispielsweise bei einer teilweisen Unterbrechung der Luftzuführung die Luftzuführung nur zu einer der Heizstufen gefährlich absinkt. Dementsprechend wird gemäß einer Ausführungsform der Erfindung auch nur dieses PTC-Element abgeschaltet.

Wird eine Überhitzungsgefahr bei einer der Heizstufen detektiert, so wird gemäß einer weiteren Ausführungsform der Erfindung aus Sicherheitsgründen die Sollheizleistung aller Heizelemente abgesenkt. Dabei kann eine deutliche Belastungsschwankung im Bordnetz des Kraftfahrzeugs auftreten, die sich beispielsweise in einer Helligkeitsschwankung von Kfz-Beleuchtungseinrichtungen bemerkbar machen kann. Zur Vermeidung extremer Belastungsschwankungen des Kfz-Bordnetzes wird gemäß einer weiter bevorzugten Ausführungsform der Erfindung die Sollheizleistung der Heizelemente allmählich abgesenkt. Eine solche Absenkung erfolgt vorzugsweise über einer Mehrzahl von Zwischenstufen innerhalb einer vorgegebenen Zeitspanne.

## Patentansprüche

1. Elektrische Heizung zur Lufterwärmung mit einem Gebläse (2) zur Erzeugung einer Luftströmung, wenigstens einem PTC-Element (3) zur Erwärmung des Luftstroms und einer Steuereinrichtung (5) zur Einstellung eines von dem Gebläse (2) zu bewirkenden Luftdurchsatzes (5a) und zur Einstellung einer von dem PTC-Element (3) zu erzeugenden Heizleistung (5b),
   **dadurch gekennzeichnet,**
   **dass** die Steuereinrichtung (5) bei der Einstellung des Luftdurchsatzes (5a) und der Heizleistung (5b) jeweils vorgegebene Untergrenzen ($P_{min}$, $V_{min}$) nicht unterschreitet und
   wobei die elektrische Heizung außerdem umfasst,

   eine Messeinrichtung (5) zur Erfassung der von dem PTC-Element (3) aufgenommenen Leistung,

   eine Vergleichseinrichtung (5) zum Vergleich der von der Messeinrichtung (5) gemessenen Leistung mit einem vorgegebenen Leistungsschwellwert ($P_{lim}$), der kleiner als die Untergrenze der einstellbaren Heizleistung ($P_{min}$) ist, und

   eine Detektionseinrichtung (5) zur Erkennung einer Unterbrechung der Luftströmung, wenn die Vergleichseinrichtung (5) feststellt, dass die gemessene Leistungsaufnahme des PTC-Elementes (3) den Leistungsschwellwert ($P_{lim}$) unterschreitet.

2. Elektrische Heizung nach Anspruch 1, **dadurch gekennzeichnet, dass** der vorgegebene Schwellwert im Bereich zwischen 20 und 80 % der Untergrenze der von dem PTC-Element (3) zu erzeugenden Heizleistung (5b) liegt, vorzugsweise zwischen 40 und 60 %.

3. Elektrische Heizung zur Lufterwärmung mit einem Gebläse (2) zur Erzeugung einer Luftströmung, wenigstens einem PTC-Element (3) zur Erwärmung des Luftstroms und einer Steuereinrichtung (5) zur Einstellung eines von dem Gebläse (2) zu bewirkenden Luftdurchsatzes (5a) und zur Einstellung einer von dem PTC-Element (3) zu erzeugenden Heizleistung (5b)
   **dadurch gekennzeichnet,**
   **dass** die Steuereinrichtung (5) bei der Einstellung des Luftdurchsatzes (5a) und der Heizleistung (5b) jeweils vorgegebene Untergrenzen ($P_{min}$, $V_{min}$) nicht unter schreitet und
   wobei die elektrische Heizung außerdem umfasst,

   eine Messeinrichtung (5) zur Erfassung der von dem PTC-Element (3) aufgenommenen Leistung,

   eine Vergleichseinrichtung (5) zum Vergleich der von der Messeinrichtung (5) gemessenen Leistung mit einem vorgegebenen Leistungsschwellwert ($P_{30\%}$), der einem vorgegebenen Bruchteil der eingestellten Heizleistung (5b) entspricht, und

   eine Detektionseinrichtung (5) zur Erkennung einer Unterbrechung der Luftströmung, wenn die Vergleichseinrichtung (5) feststellt, dass die gemessene Leistungsaufnahme des PTC-Elementes (3) den Leistungsschwellwert ($P_{30\%}$) unter schreitet.

4. Elektrische Heizung nach Anspruch 3, **dadurch gekennzeichnet, dass** der vorgegebene Schwellwert im Bereich zwischen 10 und 50 % der eingestellten Heizleistung (5b) liegt.

5. Elektrische Heizung nach einem der Ansprüche 1 bis 4, **dadurch gekennzeichnet, dass** die Steuereinrichtung (5) die von dem PTC-Element (3) zu erzeugende Heizleistung (5b) auf Null absenkt, wenn die Detektionseinrichtung (5) feststellt, dass eine Unterbrechung der Luftströmung vorliegt.

6. Elektrische Heizung nach einem der Ansprüche 1 bis 5, **dadurch gekennzeichnet, dass** die Detektionseinheit (5) bei Vorliegen einer Unterbrechung der Luftströmung eine Anzeige zur optischen und/ oder akustischen Anzeige der Unterbrechung ansteuert.

7. Elektrische Heizung nach einem der Ansprüche 1 bis 6, **dadurch gekennzeichnet, dass** die Einstellung einer von dem PTC-Element zu erbringenden Heizleistung über eine Pulsdauermodulation erfolgt.

8. Kraftfahrzeuginnenraumheizung mit einer elektrischen Heizung nach einem der Ansprüche 1 bis 6.

9. Steuereinheit für eine elektrische Heizung mit einem Gebläse (2) zur Erzeugung einer Luftströmung und wenigstens einem PTC-Element (3) zur Erwärmung des Luftstroms, wobei über die Steuereinheit ein von dem Gebläse (2) zu bewirkender Luftdurchsatz (5a) und eine von dem PTC-Element (3) zu erzeugenden Heizleistung (5b) einstellbar ist, **dadurch gekennzeichnet,** **dass** die Steuereinheit (5) so eingerichtet ist, dass bei Einstellung des Luftdurchsatzes (5a) und der Heizleistung (5b) jeweils vorgegebene Untergrenzen ($P_{min}$, $V_{min}$) nicht unterschreitbar sind und die Steuereinheit eine von dem PTC-Element (3) aufgenommene Leistung mit einem vorgegebenenen Leistungsschwellwert ($P_{lim}$), der kleiner als die Untergrenze der einstellbaren Heizleistung ($P_{min}$) ist, vergleicht und eine Unterbrechung der Luftströmung detektiert, wenn die gemessene Leistungsaufnahme des PTC-Elementes (3) den Leistungsschwellwert ($P_{lim}$) unterschreitet.

10. Steuereinheit für eine elektrische Heizung mit einem Gebläse (2) zur Erzeugung einer Luftströmung und wenigstens einem PTC-Element (3) zur Erwärmung des Luftstroms, wobei über die Steuereinheit ein von dem Gebläse (2) zu bewirkender Luftdurchsatz (5a) und eine von dem PTC-Element (3) zu erzeugenden Heizleistung (5b) einstellbar ist, **dadurch gekennzeichnet,** **dass** die Steuereinheit (5) so eingerichtet ist, dass bei Einstellung des Luftdurchsatzes (5a) und der Heizleistung (5b) jeweils vorgegebene Untergrenzen (Pmin, Vmin) nicht unterschreitbar sind und die Steuereinheit eine von dem PTC-Element (3) aufgenommene Leistung mit einem mit einem vorgegebenen Leistungsschwellwert (P30%), der einem vorgegebenen Bruchteil der eingestellten Heizleistung (5b) entspricht, vergleicht und eine Unterbrechung der Luftströmung detektiert, wenn die gemessene Leistungsaufnahme des PTC-Elementes (3) den Leistungsschwellwert (P30%) unterschreitet.

## Claims

1. An electric heater for the heating of air with a fan (2) for generating an air flow, at least one PTC element (3) for heating the air flow and a control device (5) for adjusting the effective air throughput (5a) from the fan (2) and for adjusting the generated heat output (5b) from one of the PTC elements (3), **characterized in that**, the control unit (5) does not allow to set the air throughput (5a) and heat output (5b) below specified lower limits ($P_{min}$, $V_{min}$), and whereby the electric heater additionally comprises, a measurement device (5) for determining the power consumed by the PTC element (3), a comparison device (5) to compare the power measured by the measurement device (5) with a specified power threshold value ($P_{lim}$), which is smaller than the lower limit of the adjustable heat output ($P_{min}$). and a detection device (5) for recognizing an interruption of the air flow when the comparison device (5) determines that the measured power consumed by the PTC element (3) drops below the power threshold value ($P_{lim}$).

2. An electric heater according to claim 1, **characterized in that,** the given threshold value lies within a range of between 20 % and 80% of the lower limit of the heat output (5b) that is to be generated by the PTC element (3), preferably between 40% and 60 %.

3. An electric heater for the heating of air with a fan (2) for generating an air flow, at least one PTC element (3) for heating the air flow and a control device (5) for setting the effective air throughput (5a) from the fan (2) and for setting the generated heat output (5b) from one of the PTC elements (3), **characterized in that** the control unit (5) does not allow to set the air throughput (5a) and heat output (5b) below

specified lower limits ($P_{min}$, $V_{min}$), and whereby the electric heater additionally includes, a measurement device (5) for determining the power consumed by the PTC element (3), a comparison device (5) to compare the power measured by the measurement device (5) with a specified power threshold value ($P_{30\%}$), which corresponds to a specified fraction of the adjustable heat output (5b), and a detection device (5) for recognizing an interruption of the air flow when the comparison device (5) determines that the measured power consumed by the PTC element (3) drops below the power threshold value ($P_{30\%}$).

4. An electric heater according to claim 3, **characterized in that** the specified threshold value lies in a range which is between 10% and 50% of the set heat output (5b).

5. An electric heater according to one of the claims 1 to 4, **characterized in that** the control unit (5) regulates the heat output of the PTC element (3) to be generated to zero, when the detection device (5) determines that an interruption of the air flow is present.

6. An electric heater according to one of the claims1 to 5, **characterized in that** the detection device (5) controls an indicator for an acoustical and/or optical indication of the interruption upon occurrence of an interruption.

7. An electric heater according to one of the claims 1 to 6, **characterized in that** the setting of the heat output to be generated by one of the PTC elements results from pulse width modulation control of the said element.

8. A motor vehicle interior heater comprising an electric heater according to one of the claims 1 to 6.

9. A control unit for an electric heater with a fan (2) for generating an air flow and with at least one PTC element (3) for heating the air flow, whereby a specific value of the effective air throughput (5a) from the fan (2) and a specific value of the heat output (5b) to be generated by the PTC element (3) is adjustable using the control unit, **characterized in that** the control unit (5) is configured such that on adjustment of a particular air throughput (5a) and a particular heat output (5b) predetermined specified lower limit values ($P_{min}$, $V_{min}$) cannot be under-run and that the control unit compares the power consumed by the PTC element with a predefined power threshold value ($P_{lim}$), which is smaller than the lower limit of the adjustable heat output ($P_{min}$), and that

an interruption in the air flow is detected upon determining that the measured power consumed by the PTC element (3) falls below the power threshold value ($P_{lim}$).

10. A control unit for an electric heater with a fan (2) for generating an air flow and with at least one PTC element (3) for heating the said air flow, whereby a value of the air throughput (5a) to be caused by the fan (2) and a specific value of the heat output (5b) to be generated by the PTC element (3) is adjustable by the control unit, **characterized in that** the control unit (5) is configured such that an adjustment of a particular air throughput (5a) and a particular heat output (5b) predetermined specified lower boundary values ($P_{min}$, $V_{min}$) cannot be under-run and that the said control unit compares the power consumed by the PTC element with a specified power threshold value ($P_{30\%}$), which corresponds to a predetermined fraction of the adjustable heat output (5b), and that it shall detect an interruption in the air flow when the measured power consumed by the PTC element (3) under-runs the power threshold value ($P_{30\%}$).

**Revendications**

1. Chauffage électrique pour le réchauffement d'air avec une soufflerie (2) pour générer un écoulement d'air, au moins un élément PTC (3) pour le réchauffement du courant d'air et un appareil de commande (5) pour le réglage d'un débit d'air (5a) à obtenir par la soufflerie (2) et pour le réglage d'une puissance de chauffage (5b) à générer par l'élément PTC, **caractérisé en ce que** l'appareil de commande (5) ne descend pas sous des limites inférieures ($P_{min}$, $V_{min}$) respectivement prédéfinies lors du réglage du débit d'air (5a) et de la puissance de chauffage (5b) et où le chauffage électrique comprend également un appareil de mesure (5) pour l'enregistrement de la puissance consommée par l'élément PTC (3), un appareil de comparaison (5) pour la comparaison de la puissance mesurée par l'appareil de mesure (5) avec une valeur seuil de puissance ($P_{lim}$) prédéfinie qui est inférieure à la limite inférieure de la puissance de chauffage ($P_{min}$) réglable, et un appareil de détection (5) pour l'identification d'une interruption de l'écoulement d'air lorsque l'appareil de comparaison (5) constate que la consommation mesurée de l'élément PTC (3) est inférieure à la valeur seuil de puissance ($P_{lim}$).

2. Chauffage électrique selon la revendication 1, **caractérisé en ce que** la valeur seuil prédéfinie se situe dans la plage comprise entre 20 et 80 % de la limite inférieure de la puissance de chauffage (5b) à générer par l'élément PTC (3), de préférence entre 40 et 60 %.

3. Puissance électrique pour le réchauffement d'air avec une soufflerie (2) pour générer un écoulement d'air, au moins un élément PTC (3) pour le réchauffement du courant d'air et un appareil de commande (5) pour le réglage d'un débit d'air (5a) à obtenir par la soufflerie (2), et pour le réglage d'une puissance de chauffage (5b) à générer par l'élément PTC (3) **caractérisé en ce que** l'appareil de commande (5) ne descend pas sous des limites inférieures ($P_{min}$, $V_{min}$) respectivement prédéfinies lors du réglage du débit d'air (5a) et de la puissance de chauffage (5b) et où le chauffage électrique comprend également un appareil de mesure (5) pour l'identification de la puissance consommée par l'élément PTC (3), un appareil de comparaison (5) pour la comparaison de la puissance mesurée par l'appareil de mesure (5) avec une valeur seuil de puissance ($P_{30\%}$) prédéfinie, qui correspond à une fraction prédéfinie de la puissance de chauffage (5b) réglée, et un appareil de détection (5) pour la reconnaissance d'une interruption de l'écoulement d'air lorsque l'appareil de comparaison (5) constate que la consommation mesurée de l'élément PTC (3) est inférieure à la valeur seuil de puissance ($P_{30\%}$).

4. Chauffage électrique selon la revendication 3, **caractérisé en ce que** la valeur seuil prédéfinie se situe dans la plage comprise entre 10 et 50% de la puissance de chauffage (5b) réglée.

5. Chauffage électrique selon l'une quelconque des revendications 1 à 4, **caractérisé en ce que** l'appareil de commande (5) abaisse la puissance de chauffage (5b) à générer par l'élément PTC (3) jusqu'à zéro lorsque l'appareil de détection (5) constate qu'on est en présence d'une interruption de l'écoulement d'air.

6. Chauffage électrique selon l'une quelconque des revendications 1 à 5, **caractérisé en ce que** l'unité de détection (5) active un affichage pour l'affichage visuel et/ou sonore de l'interruption lorsqu'on a une interruption de l'écoulement d'air.

7. Chauffage électrique selon l'une quelconque des revendications 1 à 6, **caractérisé en ce que** le réglage d'une puissance de chauffage à fournir par l'élément PTC s'effectue au moyen d'une modulation de durée d'impulsion.

8. Chauffage d'habitacle de véhicule avec un chauffage électrique selon l'une quelconque des revendications 1 à 6.

9. Unité de commande pour un chauffage électrique avec une soufflerie (2) pour générer un écoulement d'air et au moins un élément PTC (3) pour le réchauffement du courant d'air, le débit d'air (5a) à produire par la soufflerie (2) et une puissance de chauffage (5b) à générer par l'élément PTC (3) pouvant être réglés par l'unité de commande, **caractérisé en ce que** l'unité de commande (5) est aménagée de telle sorte que, lors du réglage du débit d'air (5a) et de la puissance de chauffage (5b), des limites inférieures ($P_{min}$, $V_{min}$) respectivement prédéfinies doivent être dépassées et l'unité de commande compare une puissance absorbée par l'élément PTC (3) avec une valeur seuil de puissance ($P_{lim}$) prédéfinie, qui est inférieure à la limite inférieure de la puissance de chauffage ($P_{min}$) réglable et détecte une interruption de l'écoulement d'air lorsque la consommation mesurée de l'élément PTC (3) est inférieure à la valeur seuil de puissance ($P_{lim}$).

10. Unité de commande pour un chauffage électrique avec une soufflerie (2) pour générer un écoulement d'air et au moins un élément PTC (3) pour le réchauffement du courant d'air, un débit d'air (5a) à produire par la soufflerie (2) et une puissance de chauffage (5b) à générer par l'élément PTC (3) pouvant être réglés au moyen de l'unité de commande, **caractérisé en ce que** l'unité de commande (5) est aménagée de telle sorte que, lors du réglage du débit d'air (5a) et de la puissance de chauffage (5b), des limites inférieures ($P_{min}$, $V_{min}$) respectivement prédéfinies doivent être dépassées et l'unité de commande compare une puissance consommée par l'élément PTC (3) avec une valeur seuil de puissance ($P_{30\%}$) prédéfinie, qui correspond à une fraction prédéfinie de la puissance de chauffage (5b) réglée, et détecte une interruption de l'écoulement d'air lorsque la consommation mesurée de l'élément PTC (3) est inférieure à la valeur seuil de puissance ($P_{30\%}$).

5

Steuereinheit

5a

5b

1

2

3

4

Fig. 1

Fig. 2

*Fig. 3*

Start

Einstellen einer Soll-Heizleistung
und eines Soll-Luftdurchsatzes bei
vorgegebenen Untergrenzen

Festlegen eines
Leistungsschwellwertes

S1

Erfassen der aufgenommenen
elektrischen Leistung

S2

S3

unterschreitet die aufgenommene elektrische
Leistung den vorgegebenen
Leistungschwellwert
·?

nein

ja

Anzeige einer Störung

S4

Absenken der Soll-Heizleistung auf
Null

S5

*Fig. 4*

Ende

PTC-Heizleistung ist größer als die vom Luftvolumen abführbare Wärmemenge → PTC-Element heizt sich auf

7  maximale vom jeweiligen Luftvolumen aufnehmbare Heizleistung

die PTC-Heizleistung kann an das jeweilige Luftvolumen abgeführt werden

Leistung

$P_1$

$A_1$

$A_1$

$A_2$

Luftdurchsatz

$V_2$

$V_1$

*Fig. 5*

unzulässiger Bereich zur Einstellung des Luftdurchsatzes

8

7

Leistung

$P_1$

$A_1$

$A_1$

9  unzulässiger Bereich zur Einstellung der Heizleistung

$P_{min}$

$P_{lim}$

$A_2$

Luftdurchsatz

$V_2$

$V_1$

$V_{min}$

Detektionsbereich einer unzulässig niedriegen Ist-Heizleistung

*Fig. 6*

Fig. 7

Leistung

P₁ — A₁

P₃₀%

A₂

V₂          V₁          Luftdurchsatz

7

Detektionsbereich einer
unzulässig niedriegen
Ist-Heizleistung